# EUROPEAN PATENT SPECIFICATION

(11) **EP 3 632 591 B1**
(45) Date of publication and mention of the grant of the patent: **31.08.2022**
(21) Application number: 19199741.0
(22) Date of filing: 26.09.2019
(51) Int. Cl.: B33Y 10/00, B22F 5/04, B29C 64/153, B29C 64/40, B22F 10/20, B22F 10/40, B22F 10/364, B22F 10/38, B22F 10/28

(54) **ADDITIVE MANUFACTURING METHOD FOR PRODUCING A COMPONENT AND SUPPORT STRUCTURES**
VERFAHREN ZUR ADDITIVEN HERSTELLUNG EINES BAUTEILS UND STÜTZSTRUKTUREN
MÉTHODE DE FABRICATION ADDITIVE D'UN COMPOSANT ET STRUCTURES DE SUPPORT

(30) Priority: 03.10.2018 GB 201816144
(43) Date of publication of application: 08.04.2020
(73) Proprietor: Rolls-Royce Power Engineering PLC, Derby DE24 8BJ (GB)
(72) Inventor: Jones, Thomas, Derby, Derbyshire DE24 8BJ (GB)
(74) Representative: Rolls-Royce plc

(56) References cited:
- EP-A1- 3 050 650
- GB-A- 2 515 287
- US-A1- 2013 112 366
- US-A1- 2014 335 313
- ANDREAU OLIVIER ET AL: "Texture control of 316L parts by modulation of the melt pool morphology in selective laser melting", JOURNAL OF MATERIALS PROCESSING TECHNOLOGY, ELSEVIER, NL, vol. 264, 31 August 2018 (2018-08-31), pages 21-31, XP085512048, ISSN: 0924-0136, DOI: 10.1016/J.JMATPROTEC.2018.08.049

## Description

### Field of the Disclosure

The present disclosure relates to an additive layer manufacturing method for producing a component. In particular, the disclosure relates to an additive layer manufacturing method for reducing post-build processing requirements.

### Background of the Disclosure

Components manufactured by additive layer manufacturing (ALM) methods can have significant performance, weight, cost and lead time advantages over components manufactured by more traditional methods.

Powder bed ALM methods construct components layer by layer by depositing powder on a base plate and then selectively consolidating the powder using a laser or other heat source. These steps are repeated to produce a three dimensional component.

ALM methods are unable to produce components with overhangs greater than 45 degrees. For such overhangs, support structures are required to prevent build failures. These support structures are built up layer upon layer along with the component. The support structures are subsequently removed from the component and disposed of.

Removal of the support structures is typically carried out manually using hand tools or machine tools. These processes add significant time, cost and limits to possible geometry of the resultant component. Furthermore, unless the surface of the component is completely machined, subsequent dressing of components to remove the "witness lines" remaining after the removal of the support structures is often necessary especially in areas sensitive to surface finishing.

Small contact supports are known and these can be removed more easily but the surface finish is often very rough as a result of small peaks remaining where the small contact supports were in contact and the sintering of powder particles onto the surface in between the supported points.

There is a desire to provide a method that ameliorates at least some of the problems associated with the known methods.

Great British Patent Application GB 2515287 A discloses a method of additive layer manufacturing, it discloses that a support structure is formed under complex structures being formed. United States Patent Application US 2013/0112366 A1 discloses a process of manufacturing complex metal parts and using an additive layer manufacturing technique. The structures are formed having a support structure made under them with a layer of unmelted material between the support and the component. European Patent Application EP 3050650 A1 also discloses forming a complex shape using an additive manufacturing process, in which support structures are constructed around the manufactured component. United States Patent Application US 2014/0335313 A1 discloses the formation of a contact free support structure for overhang geometries, to allow for complex structures to be manufactured using powder bed metal additive manufacturing techniques.

### Summary of the Disclosure

The invention is set forth in the independent claim 1, and the embodiments are set forth in the dependent claims.

In a first aspect, the present disclosure provides a method of manufacturing a component by additive layer manufacturing, said method comprising forming the component and at least one support structure by consolidating consecutive layers of deposited powder material using a heat source wherein the component and the support structure are at least partially spaced by a void containing unconsolidated powder material and further comprising forming the component having an overhang and forming the support structure below the overhang with the void containing unconsolidated powder spacing the overhang and the support structure and characterised in that forming at least one bridge portion of consolidated material bridging the overhang of the component and the support structure.

The support structure formed of consolidated powder material and the void containing unconsolidated powder act to support the build of the component, especially where the component comprises an overhang of greater than 45 degrees to the vertical. Furthermore, the consolidation of the powder material into the at least one support structure limits the volume of powder material available for sintering onto the surface of the component to that contained within the void such that the surface finish is less rough. If the consolidated support structure was not provided, the unconsolidated powder bed below/adjacent the component would provide a large volume of powder for sintering onto the component surface.

The method comprises forming the component and the at least one support structure (e.g. a plurality of support structures) by additive layer manufacturing using a powder material. The powder material may be a metal or metal alloy e.g. nickel, copper, iron, steel, nickel alloys, titanium, titanium alloys, magnesium, magnesium alloys, aluminium, aluminium alloys, vanadium, zirconium, hafnium, or refractory metals such as niobium, molybdenum, tantalum, tungsten and rhenium. The powder material may be ceramic, metallic-ceramic combination or metal matrix composite e.g. from zirconium, yttria or silicon carbide.

The additive layer manufacturing method comprises depositing and selectively consolidating consecutive layers of powder material using a heat source (e.g. a laser source or electron beam). This step is repeated multiple times so that the consolidated horizontal cross-sections of the component and at least one support structure formed in each layer stack up layer upon layer in the vertical build direction to form the three dimensional component and at least one support structure.

In some embodiments, the method comprises consolidating the deposited powder material in each layer to form the horizontal cross-section of the at least one support structure prior to consolidating the deposited powder material in the layer to form the horizontal cross-section of the component. Again, this helps to reduce the volume of unconsolidated powder available for sintering onto the surface of the component.

In some embodiments, the void has a thickness equal to the thickness one or more of the deposited layers of powder material. For example, the void may have a thickness of 2 or more e.g. 2 to 5 times the thickness of a deposited layer of powder material. The powder material in the void may be provided by not exposing the powder material in the void to the heat source in the so that the powder remains unconsolidated.

The overhang may be at an angle of 45 degrees or more to the vertical.

The bridge portion is formed by heating the consolidated powder material forming the overhang to form a melt pool that extends through the void to the support structure. As the melt pool extends through the void to the support structure, it will cool sufficiently such that it is unable to melt the surface of the support structure. Accordingly, the bridge portion formed will be in contact, but may not be bonded to the support structure.

In some embodiments, the method comprises forming a plurality of bridge portions e.g. a plurality of bridge portions substantially equally spaced along the void.

In this way, the support structure is partially bonded to the overhang of the component which provides support to the overhang but which allows for easy post-build separation of the component and support structure along the void

The method may be used to form a component of a gas turbine engine.

In a second aspect not covered by the present invention, there is provided a component manufactured according to the first aspect.

In a third aspect not covered by the present invention, there is provided a gas turbine engine comprising a component manufactured according to the first aspect.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief Description of the Drawings

Embodiments will now be described by way of example only, with reference to the Figures, in which:
Figure 1 shows a component with an associated support structure;
Figure 2 shows the formation of a bridge portion across the void between the component and the support structure;
Figure 3 shows a plurality of bridge portions along the void; and
Figure 4 shows a number of component/support arrangements.

### Detailed Description and Further Optional Features of the Disclosure

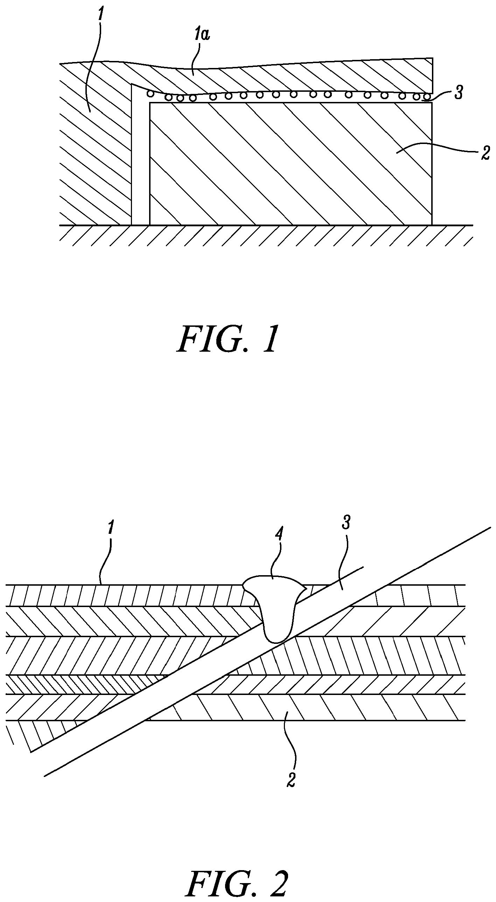

Figure 1 shows a component 1 having an overhang 1a which is spaced from a support structure 2 by a void 3 containing unconsolidated powder material.

The component 1 and support structure 2 are both formed by additive layer manufacturing by depositing and selectively consolidating consecutive layers of a powder material using a laser source.

The deposited powder material in each layer is first consolidated to form a horizontal cross-section of the support structure 2 prior to the formation of the horizontal cross-section of the component 1.

This step is repeated multiple times so that the consolidated horizontal cross-sections of the component 1 and the support structure 2 formed in each layer stack up layer upon layer in the build direction to form the three dimensional component 1 and support structure 2.

The void 3 containing unconsolidated powder material is formed by not exposing one or more e.g. 2 or more layers of the deposited power material to the laser source so that the powder material remains unconsolidated. Thus the void and layer of unconsolidated powder material have a thickness of one or more (e.g. 2 or more) times the thickness of each deposited layer of powder material.

The support structure 1 and the void 3 containing unconsolidated powder act to support the build of the overhang 1a of the component 1.

The consolidation of the powder material into the support structure 2 limits the volume of powder material available for sintering onto the surface of the overhang 1a of the component 1 to that contained within the void 3 such that the surface finish of the overhang is less rough. If the support structure 2 was not provided, the unconsolidated powder bed below/adjacent the overhang 1a component 1 would provide a large volume of powder for sintering onto the overhang 1a surface.

Figure 2 shows a second embodiment of a component 1 having a 45 degree overhang spaced from the support structure 2 by a void 3 containing unconsolidated powder material. Each of the component 1 and support structure 2 are formed of consolidated layers of powder material. The uppermost consolidated layer of the component 1 is heated using the laser source to form a melt pool 4 what melts though the lower layers of the component 1 and into the void 3.

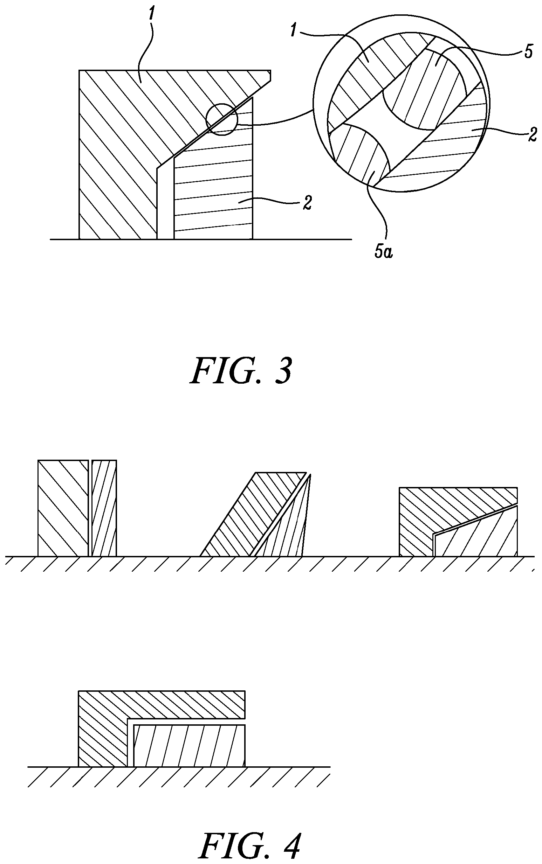

When the melt pool cools, a bridge portion 5 is formed between the component 1 and the support structure 2 as shown in Figure 3. A plurality of equally spaced bridge portions 5, 5a are formed along the void.

These bridge portions 5, 5a help to support the overhang of the component 1 during formation but allow easy separation of the component 1 and support structure 2 post-build with minimal surface processing required.

Figure 4 shows a number of different component and support structure arrangements that can be formed using the method described herein. Even when the component includes no overhang or an overhang at an angle of less than 45 degrees to the vertical, the method described herein is useful for improving surface finish as the consolidated support structure limits the volume of powder available for sintering onto the surface of the component facing the support structure.

## Claims

1. A method of manufacturing a component (1) by powder bed additive layer manufacturing, said method comprising forming the component (1) and at least one support structure (2) by consolidating consecutive layers of deposited powder material using a heat source wherein the component (1) and the support structure (2) are at least partially spaced by a void (3) containing unconsolidated powder material and further comprising forming the component (1) having an overhang (1a) and forming the support structure (2) below the overhang (1a) with the void (3) containing unconsolidated powder spacing the overhang (1a) and the support structure (2) and **characterised in that** it further comprises forming at least one bridge portion (5) bridging the overhang (1a) of the component (1) and the support structure (2) by heating the consolidated powder material forming the overhang (1a) to form a melt pool (4) that extends through the void (3) to the support structure (2)..

2. The method according to Claim 1 comprising depositing and consolidating the powder material in each layer to form a horizontal cross-section of the at least one support structure (2) prior to consolidating the powder material to form the horizontal cross-section of the component (1).

3. The method according to Claim 1 or Claim 2 wherein the void (3) has a thickness equal to the thickness of one or more of the layers of deposited powder material.

4. The method according to Claim 3 wherein the void (3) has a thickness equal to the thickness of between 2 to 5 layers of deposited powder material.

5. The method according to Claim 1 comprising forming a plurality of bridge portions (5,5a) substantially equally spaced along the void (3).

6. The method according to any one of the preceding claims wherein the component (1) is a component of a gas turbine engine.

## Patentansprüche

1. Verfahren zum Herstellen einer Komponente (1) durch additive Schichtherstellung im Pulverbett, wobei das Verfahren das Bilden der Komponente (1) und mindestens einer Stützstruktur (2) durch Verfestigen aufeinanderfolgender Schichten aus abgeschiedenem Pulvermaterial unter Verwendung einer Wärmequelle umfasst, wobei die Komponente (1) und die Stützstruktur (2) zumindest teilweise durch einen Hohlraum (3) beabstandet sind, der unverfestigtes Pulvermaterial enthält, und ferner umfassend das Bilden der Komponente (1) mit einem Überhang (la) und das Bilden der Stützstruktur (2) unterhalb des Überhangs (la), wobei der Hohlraum (3), der unverfestigtes Pulver enthält, den Überhang (la) und die Stützstruktur (2) beabstandet, und **dadurch gekennzeichnet, dass** es ferner das Bilden mindestens eines Brückenabschnitts (5) umfasst, der den Überhang (la) der Komponente (1) und der Stützstruktur (2) durch Erhitzen des verfestigten Pulvermaterials überbrückt, das den Überhang (1a) bildet, um ein Schmelzbad (4) zu bilden, das sich durch den Hohlraum (3) zur Stützstruktur (2) erstreckt.

2. Verfahren nach Anspruch 1, umfassend das Abscheiden und Verfestigen des Pulvermaterials in jeder Schicht, um einen horizontalen Querschnitt der mindestens einen Stützstruktur (2) zu bilden, bevor das Pulvermaterial verfestigt wird, um den horizontalen Querschnitt der Komponente (1) zu bilden.

3. Verfahren nach Anspruch 1 oder Anspruch 2, wobei der Hohlraum (3) eine Dicke aufweist, die gleich der Dicke einer oder mehrerer der Schichten aus abgeschiedenem Pulvermaterial ist.

4. Verfahren nach Anspruch 3, wobei der Hohlraum (3) eine Dicke aufweist, die gleich der Dicke von zwischen 2 bis 5 Schichten aus abgeschiedenem Pulvermaterial ist.

5. Verfahren nach Anspruch 1, umfassend das Bilden einer Vielzahl von Brückenabschnitten (5, 5a), die im Wesentlichen gleichmäßig entlang des Hohlraums (3) beabstandet sind.

6. Verfahren nach einem der vorhergehenden Ansprüche, wobei die Komponente (1) eine Komponente eines Gasturbinentriebwerks ist.

## Revendications

1. Procédé de fabrication d'un composant (1) par fabrication additive par couches sur lit de poudre, ledit procédé comprenant la formation du composant (1) et d'au moins une structure de support (2) en consolidant des couches consécutives de matière pulvérulente déposée à l'aide d'une source de chaleur, ledit composant (1) et ladite structure de support (2) étant au moins partiellement espacées par un vide (3) contenant une matière pulvérulente non consolidée et comprenant en outre la formation du composant (1) possédant un porte-à-faux (la) et la formation de la structure de support (2) sous le porte-à-faux (la) avec le vide (3), contenant de la poudre non consolidée, espaçant le porte-à-faux (la) et la structure de support (2) et **caractérisé en ce qu'**il comprend en outre la formation d'au moins une partie de pont (5) pontant le porte-à-faux (la) du composant (1) et la structure de support (2) en chauffant la matière pulvérulente consolidée formant le porte-à-faux (la) pour former un bain de fusion (4) qui s'étend à travers le vide (3) jusqu'à la structure de support (2).

2. Procédé selon la revendication 1, comprenant le dépôt et la consolidation de la matière pulvérulente dans chaque couche pour former une section transversale horizontale de l'au moins une structure de support (2) avant de consolider la matière pulvérulente pour former la section transversale horizontale du composant (1).

3. Procédé selon la revendication 1 ou la revendication 2, ledit vide (3) possédant une épaisseur égale à l'épaisseur d'une ou de plusieurs des couches de matière pulvérulente déposée.

4. Procédé selon la revendication 3, ledit vide (3) possédant une épaisseur égale à l'épaisseur allant de 2 à 5 couches de matière pulvérulente déposée.

5. Procédé selon la revendication 1, comprenant la formation d'une pluralité de parties de pont (5, 5a) espacées sensiblement de manière égale le long du vide (3).

6. Procédé selon l'une quelconque des revendications précédentes, ledit composant (1) étant un composant d'un moteur à turbine à gaz.
